Europäisches Patentamt

European Patent Office

Office européen des brevets

(11) Numéro de publication : **0 230 691 B1**

(12) **FASCICULE DE BREVET EUROPEEN**

(45) Date de publication du fascicule du brevet :
**26.04.95 Bulletin 95/17**

(51) Int. Cl.$^6$ : **H04B 7/005**

(21) Numéro de dépôt : **86202295.1**

(22) Date de dépôt : **16.12.86**

(54) **Dispositif d'asservissement de la puissance d'emission d'un faisceau hertzien.**

(30) Priorité : **20.12.85 FR 8518919**

(43) Date de publication de la demande :
**05.08.87 Bulletin 87/32**

(45) Mention de la délivrance du brevet :
**26.04.95 Bulletin 95/17**

(84) Etats contractants désignés :
**BE CH DE FR GB IT LI NL SE**

(56) Documents cités :
**EP-A- 0 115 139**
**US-A- 4 309 771**
**US-A- 4 361 892**

(73) Titulaire : **TRT TELECOMMUNICATIONS RADIOELECTRIQUES ET TELEPHONIQUES**
**88 rue Brillat Savarin**
**F-75013 Paris (FR)**

(72) Inventeur : **Bonnerot, Georges**
**Société Civile SPID**
**209, rue de l'Université**
**F-75007 Paris (FR)**
Inventeur : **Lerouge, Christophe**
**Société Civile SPID**
**209, rue de l'Université**
**F-75007 Paris (FR)**

(74) Mandataire : **Chaffraix, Jean et al**
**Société Civile S.P.I.D.**
**156, Boulevard Haussmann**
**F-75008 Paris (FR)**

## Description

La présente invention concerne un dispositif d'asservissement de la puissance d'émission d'un faisceau hertzien entre au moins une station d'émission et une station de réception fournissant des informations relatives au signal reçu, à la station d'émission au moyen d'un canal de retour, le dispositif d'asservissement comportant, entre autres, à la station de réception un dispositif à seuil de mesure de niveau de signal reçu apportant une information du niveau de signal reçu, à la station d'émission des moyens de commande pour augmenter ou diminuer la puissance d'émission selon une dynamique de réglage donnée, comportant, en outre, à la station réception un dispositif à seuil de mesure du taux d'erreur du signal reçu apportant une information de qualité du signal reçu, qui en combinaison avec le dispositif à seuil de mesure de niveau de signal reçu et au moyen d'un dispositif de traitement combiné des informations, situé à la station d'émission permet d'appliquer un traitement combiné des mesures de niveau de signal reçu et de taux d'erreur du signal reçu aux moyens de commande de la puissance d'émission pour l'asservissement de ladite puissance d'émission.

Un dispositif d'asservissement de la puissance d'émission est connu du brevet des Etats-Unis d'Amérique n° 4 004 224, déposé par la Société SIEMENS. Dans ce brevet la commande de la puissance d'émission est fonction d'un critère lié uniquement au niveau du signal reçu. Le choix d'utilisation de ce seul critère présente plusieurs inconvénients. Un premier inconvénient apparaît du fait qu'il n'est pas tenu compte de la qualité du signal reçu, c'est à dire du taux d'erreur existant dans le signal reçu, en effet la puissance d'émission est automatiquement augmentée pour conserver un niveau de signal reçu constant et ceci même si la valeur de puissance émise impose un fonctionnement dans le domaine non linéaire. Le choix de ce critère est incompatible avec la recherche d'un taux d'erreur faible et donc d'une qualité de signal élevée nécessaire aux systèmes actuels. Un second inconvénient est qu'une telle régulation de puissance ne prend en considération que les perturbations inhérentes au canal de transmission régulé et est inopérante face à des perturbations dues à des canaux adjacents.

Par ailleurs on connait l'utilisation d'un asservissement de puissance d'émission fonction uniquement d'un critère de qualité. On consultera à ce sujet le brevet des Etats-Unis d'Amérique n° 4 309 771. Dans ce brevet la commande de niveau de puissance ne dépend que du critère lié à la qualité de transmission, c'est à dire dépend du taux d'erreur mesuré dans le signal reçu, les erreurs étant mesurées bond par bond à l'aide, par exemple, d'un bit de parité. Utiliser un tel critère de manière unique présente des inconvénients dont le premier qui est le plus flagrant est qu'il est nécessaire d'attendre l'apparition d'un certain nombre d'erreurs supérieur à un seuil prédéterminé, pour commencer à intervenir sur le niveau de puissance d'émission, or il est recherché dans ces systèmes un fonctionnement dont le taux de qualité est extrêmement élevé, le nombre d'erreurs apparaissant dans la journée devant être très faible. Un deuxième inconvénient relatif à l'emploi d'un tel critère de manière unique est que lorsque l'apparition d'erreurs est liée à la présence de distorsion dans le canal de propagation, des phénomènes de blocage peuvent se produire. En effet, le niveau de puissance d'émission est alors augmenté sans pour cela supprimer les erreurs, ce qui a pour effet d'autoriser l'augmentation de puissance émise jusqu'à la valeur maximale, domaine de puissance où surviennent de nombreuses non-linéarités, le nombre d'erreurs s'accroissant considérablement, le dispositif est bloqué et lorsque le taux d'erreur devient supérieur à $10^{-3}$ (limite supérieure couramment admise), la transmission est alors coupée.

La présente invention propose un dispositif du genre cité qui permet de combiner pour l'asservissement de la puissance d'émission les critères de niveau de la puissance reçue et le critère de qualité tout en restant dans les limites tolérables de la dynamique de réglage et donc ne présentant pas les inconvénients de ces dispositifs connus.

Pour cela, le dispositif de l'invention est remarquable en ce que le traitement combiné consiste à produire une augmentation ou une diminution de la puissance d'émission pour une première partie de la dynamique de réglage en ne tenant compte uniquement que de l'information de niveau de signal reçu relativement à un premier seuil préétabli et pour une seconde partie de la dynamique de réglage en tenant compte de plus d'une part de l'information de qualité du signal reçu relativement à un second seuil préétabli et d'autre part d'une valeur maximale de la puissance d'émssion autorisée.

Ainsi à la station réception, un second dispositif permet d'apprécier la qualité du signal reçu en mesurant le taux d'erreur du signal reçu et d'exploiter cette information de qualité en combinaison avec l'information de niveau du signal reçu par l'intermédiaire d'un dispositif de traitement combiné pour commander et asservir la puissance à la station d'émission.

La demanderesse est parvenue à combiner avantageusement les trois critères de niveau reçu, de qualité du signal et de la valeur maximale de la puissance d'émission autorisée pour ainsi éviter les inconvénients précités, tout en atteignant un but souvent recherché dans le domaine des faisceaux hertziens où l'émission est en général réalisée avec une marge beaucoup trop grande, but qui est de limiter la puissance émise. D'autre part l'utilisation combinée de ces trois critères permet d'améliorer nettement l'efficacité spectrale et de réduire ainsi l'espacement entre canaux tout en ayant recours à des équipements de modulation simples.

Pour une meilleure compréhension de l'invention, il est nécessaire de procéder à quelques rappels rapides relatifs au contexte dans lequel évolue le dispositif selon ladite invention.

La modulation d'amplitude en quadrature à 16 états (MAQ 16) permet au prix d'une complexité raisonnable d'assurer la transmission de 140 M bit/s dans un plan de fréquences à 40 MHz d'espacement. La transmission correcte d'une telle modulation dans les faisceaux hertziens impose l'utilisation d'amplificateurs linéaires.

Pour cela les amplificateurs à l'état solide actuels sont utilisés pour la transmission de signaux dont la puissance moyenne présente un recul d'environ 6 dB par rapport au point de compression 1 dB, ceci afin d'obtenir un taux d'erreur résiduel qui soit bien inférieur à $10^{-10}$.

Cependant l'expérience montre que lorsqu'on mesure le gain du système à taux d'erreur constant pour des taux d'erreurs supérieurs à $10^{-8}$ ou $10^{-7}$, celui-ci continue de croître lorsque la puissance d'émission est augmentée au-delà du point de recul de 6dB (généralement choisi).

Le dispositif selon l'invention, permet de commander l'augmentation de la puissance d'émission et ainsi d'améliorer le gain du système pendant les périodes où les phénomènes d'évanouissement de propagation conduisent à un niveau de réception proche du seuil du récepteur. Les gains ainsi obtenus peuvent être de l'ordre de 3 dB ce qui permet de diviser environ par 2 les temps de coupure qui sont imposés lorsque le taux d'erreur est supérieur à $10^{-3}$.

La description suivante en regard des dessins annexés, donnés à titre d'exemple, fera bien comprendre comment l'invention peut être réalisée.

La figure 1 montre un schéma synoptique illustrant une liaison entre deux stations.

La figure 2 propose un schéma synoptique des dispositifs à seuil de mesure de niveau reçu et de qualité du signal de la station de réception.

La figure 3 représente un schéma synoptique des moyens de commande de la puissance d'émission.

La figure 4 décrit un traitement mis en oeuvre pour commander les variations de puissance d'émission selon les informations obtenues.

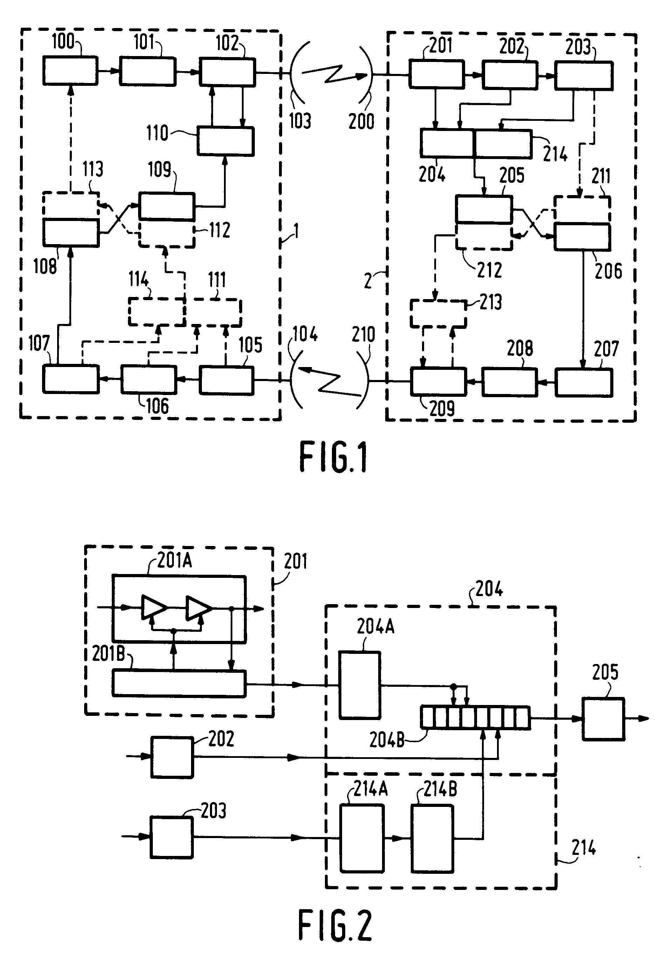

Sur la figure 1 est montré un schéma synoptique illustrant une liaison entre deux stations 1 et 2. Dans la suite de la description et bien que ces deux stations possèdent chacune une partie émission et une partie réception, pour une meilleure appréhension du sujet la station 1 sera appelée station d'émission et la station 2 station de réception, le signal considéré étant émis par la station 1 et reçu par la station 2. Il est bien évident que la description serait absolument identique pour un signal émis de la station 2 vers la station 1. Les circuits et dispositifs par lesquels le signal transite dans cette direction de transmission décrite sont représentés sur la figure en traits pleins alors que dans l'autre direction de transmission ces circuits et dispositifs, d'ailleurs identiques aux premiers, figurent en pointillés.

La station d'émission 1 comporte, entre autres, un dispositif de trame émission 100 suivi d'un circuit modulateur 101 lui-même connecté à un circuit d'émission 102. A la sortie du circuit émetteur 102 est branchée une antenne 103 pour l'émission du signal. A la station de réception 2, le signal est reçu au moyen de l'antenne 200 branchée à l'entrée du circuit récepteur 201 dont la sortie est démodulée au moyen du circuit démodulateur 202, le signal démodulé est alors envoyé vers le dispositif de trame réception 203. Le circuit récepteur 201 fournit les mesures de niveau reçu au dispositif à seuil de mesure de niveau de signal reçu 204 (par exemple un circuit comparateur ou un circuit connu sous le nom de "trigger de Schmitt") qui fournit à son tour des signaux logiques en réponse à la comparaison du niveau de signal reçu avec un seuil prédéterminé. Les signaux logiques sont alors appliqués à l'entrée d'un circuit multiplexeur 205 permettant de multiplexer dans un canal de retour les informations précédentes fournies par le circuit à seuils 204. La transmission de ce canal de retour est effectuée à l'aide d'un canal du multiplex de service par l'intermédiaire d'un circuit multiplexeur de ligne de service 206, d'un dispositif de trame émission 207, d'un circuit modulateur 208, d'un circuit émetteur 209 et d'une antenne 210 qui peut d'ailleurs être tout simplement l'antenne 200. Les informations transitant par ce canal retour sont reçues à la station d'émission au moyen d'une antenne 104 qui pourrait être l'antenne 103 et d'un circuit récepteur 105, sont démodulées par un circuit démodulateur 106 puis sont envoyées vers un dispositif de trame réception 107 qui aiguille les informations relatives au canal de retour vers un circuit démultiplexeur de ligne de service 108 relié à un circuit démultiplexeur 109 connecté aux moyens de commande de puissance d'émission 110. Les moyens de commande 110 sont ceux reliés au circuit émetteur 102 et reçoivent de celui-ci l'indication de niveau de puissance émise. La sortie des moyens de commande 100 est appliquée au circuit émetteur 102 pour asservir la puissance d'émission en augmentant ou diminuant la puissance émise en fonction des informations traitées dans lesdits moyens de commande.

Dans le sens de transmission de la station 2 vers la station 1 le processus est identique. le circuit émetteur 209 de la station émet au moyen de l'antenne 210 les signaux provenant du dispositif de trame émission 207 et du circuit modulateur 208. Ces signaux émis par la station 2 sont reçus à la station 1 par l'antenne 104 et le circuit récepteur 105 qui est connecté à un dispositif à seuil de mesure de niveau de signal reçu 111 en relation avec un circuit multiplexeur 112 lui-même relié au circuit multiplexeur de ligne de service 113. Les informations de mesure de niveau de signal reçu présentes à la sortie du circuit multiplexeur 113 sont transmises vers l'antenne 200 et le circuit récepteur 201 par l'intermédiaire du dispositif de trame émission 100, du circuit modulateur 101 et du circuit émetteur 102 associé à l'antenne 103. Les signaux à la sortie du circuit récepteur 201 sont démodulés par le circuit démodulateur 202 et passent par le dispositif de trame réception 203 qui aiguille les informations vers un circuit démultiplexeur de ligne de service 211 relié à un circuit démultiplexeur 212 qui transmet les informations de niveau de signal reçu aux moyens de commande de puissance d'émission 213 reliées d'autre part au circuit émetteur 209 qui leur fournit ainsi l'indication de niveau de puissance émise. La sortie des moyens de commande 213 est connectée au circuit émetteur 209 pour asservir la puissance d'émission.

Conformément à l'invention, le dispositif d'asservissement de la puissance d'émission d'un faisceau hertzien entre au moins une station d'émission 1 et une station de réception 2 fournissant des informations relatives au signal reçu à la station d'émission au moyen d'un canal de retour, le dispositif d'asservissement comportant, entre autres, à la station de réception un dispositif à seuil de mesure de niveau de signal reçu 204 apportant une information du niveau de signal reçu, à la station d'émission des moyens de commande 110 pour augmenter ou diminuer la puissance d'émission selon une dynamique de réglage donnée, est remarquable en ce qu'il comporte, en outre, à la station réception un dispositif à seuil de mesure du taux d'erreur du signal reçu 214 apportant une information de qualité du signal reçu, qui en combinaison avec le dispositif à seuil de mesure de niveau de signal reçu 204 et au moyen d'un dispositif de traitement combiné des informations, situé à la station d'émission 1, permet d'appliquer un traitement combiné des mesures de niveau de signal reçu et de taux d'erreur du signal reçu aux moyens de commande 110, de la puissance d'émission pour l'asservissement de ladite puissance d'émission, le traitement combiné consistant à produire une augmentation ou une diminution de la puissance d'émission pour une première partie de la dynamique de réglage en ne tenant compte uniquement que de l'information de niveau de signal reçu relativement à un premier seuil préétabli et pour une seconde partie de la dynamique de réglage en tenant compte de plus de l'information de qualité du signal reçu relativement à un second seuil préétabli.

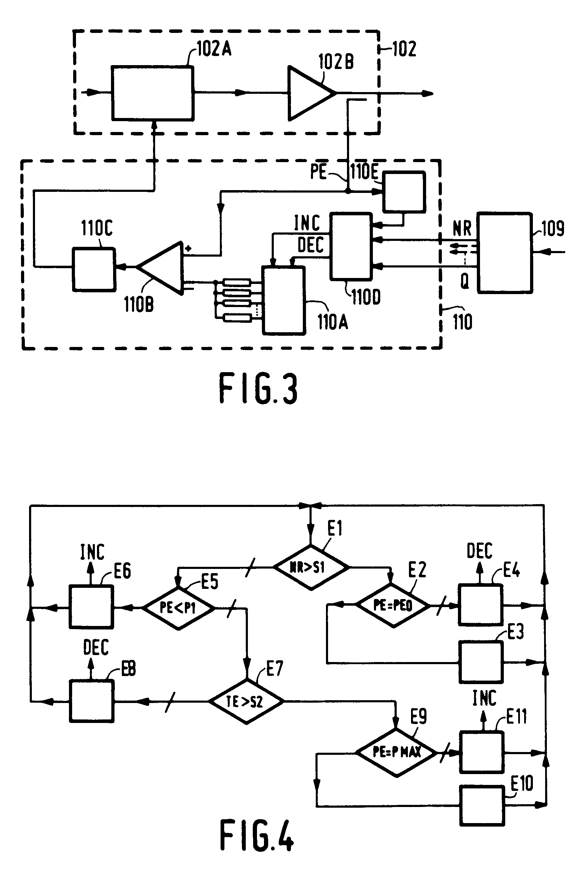

En effet un dispositif à seuil de mesure du taux d'erreur du signal reçu 214 (par exemple un circuit comparateur ou un circuit connu sous le nom de "trigger de Schmitt") est associé au dispositif à seuil de mesure de niveau reçu 204. Aux entrées de ce dispositif 214 sont appliquées d'une part, provenant du circuit démodulateur 202, l'information de perte de synchronisation et d'autre part, provenant du dispositif de trame réception 203 l'information de divergence de parité. La sortie du dispositif 214 qui fournit ainsi l'information de qualité du signal reçu est reliée au circuit multiplexeur 205 qui réalise alors le multiplexage des informations de niveau du signal reçu et de qualité du signal reçu. Les informations ainsi multiplexées sont transmises par l'intermédiaire des différents circuits et dispositifs décrits précédemment pour la transmission des informations relatives au niveau du signal reçu et démultiplexées par le circuit démultiplexeur 109 connecté aux moyens de commande 110. Le dispositif de traitement combiné des informations est remarquable en ce qu'il est inséré dans les moyens de commande 110, il est décrit à la figure 3 alors qu'un traitement combiné des informations est proposé à la figure 4.

Dans le sens de transmission de la station 2 vers la station 1, de manière identique, un dispositif à seuil de mesure de taux d'erreur du signal reçu 114 est associé au dispositif à seuil de mesure de niveau reçu 111 de même qu'un dispositif de traitement combiné des informations est inséré dans les moyens de commande 213.

La figure 2 propose un schéma synoptique des dispositifs à seuil de mesure de niveau du signal reçu et de qualité du signal de la station de réception 2, par conséquent pour un sens de transmission des informations de la station 1 vers la station 2. Sur ce schéma le circuit récepteur 201 n'apparaît uniquement qu'avec un amplificateur FI (Fréquence Intermédiaire) 201A et un circuit de contrôle automatique de gain 201B. Le signal de sortie de l'amplificateur 201A est réinjecté vers le circuit 201B qui contrôle ainsi le gain de l'amplificateur 201A. Le circuit 201B fournit la mesure de niveau de signal reçu au dispositif à seuil de mesure de niveau de signal reçu 204 qui comporte un circuit à seuil logique 204A et un registre 204B. Le circuit à seuil logique 204A alimente le registre 204B en données binaires concernant le dépassement ou le non dépassement du niveau du signal reçu relativement à des seuils de référence. Un convertisseur analogique numérique peut très bien remplacer le circuit à seuil 204 A. Du circuit démodulateur 202 est émis un signal logique d'alarme, lorsqu'apparait une perte de synchronisation à la station de réception 2, ce signal logique est transmis vers le registre 204 B. Lors de l'apparition d'un tel signal d'alarme, il y a conservation du niveau de puissance émise puis après un temps Ta (de l'ordre de 10 s), la puissance émise est ramenée à son niveau minimum. Le dispositif de trame réception 203 fournit une information de divergence du bit de parité au dispositif à seuil de mesure de la qualité du signal reçu 214. Conformément à l'invention, le dispositif 214 comporte un circuit de comptage 214 A qui permet d'apprécier le taux d'erreur en comptant le nombre de divergences de parité pendant une certaine durée de temps T. Cette durée de temps ou fenêtre de mesure est fixe tant que le nombre de divergences de parité est faible, par exemple inférieur ou égal à $n_1$ divergences de parité pendant T. Une telle fenêtre de mesure peut être obtenue par exemple par comptage de la fréquence de récurrence de la trame, la fermeture ou l'ouverture de la fenêtre pour une nouvelle durée de comptage dépendant du contenu du circuit de comptage lui-même remis à zéro à chaque nouvelle fenêtre. Dès que le nombre de divergences augmente cette durée devient variable, quand le circuit de comptage a compté $n_1$ divergences la fenêtre de mesure est fermée et une nouvelle fenêtre de mesure est ouverte pour un nouveau comptage. Lorsqu'il est constaté l'apparition de $N_1$ fenêtres de durée de temps réduite un circuit à seuil logique 214 B est activé et fournit un signal logique au registre 204 B le taux d'erreur étant supérieur au seuil prédéterminé $n_1 \times N_1$. Le retour à la normale ou désactivation du circuit 214 B est obtenu si de nouveau dans chacune de $N_2$ fenêtres de durée T le nombre de divergences est inférieur ou égal à un nombre $n_2$, le seuil de désactivation étant ainsi égal à $n_2 \times N_2$. Pour se prémunir contre l'apparition de paquets d'erreurs fugitives, il est possible de plus de n'autoriser le comptage des divergences de parité qu'après une temporisation de durée t, cette temporisation t n'étant pas effectuée lors du retour à la normale et donc de la désactivation du circuit 214 B.

Conformément à l'invention les différents signaux logiques représentant les informations de niveau de signal reçu et de qualité de signal reçu sont stockés dans le registre 204 B et écoulés en mode série vers le multiplexeur 205.

La figure 3 représente un schéma synoptique des moyens de commande de la puissance d'émission, qui dans le sens de transmission décrit (de la station 1 vers la station 2) appartiennent à la station d'émission 1 et sont référencés 110 sur la figure 1.

Les moyens de commande 110 produisent un signal de commande qui est appliqué à un atténuateur commandable 102 A du circuit émetteur 102. L'atténuateur commandable 102 A agit sur le gain d'un amplificateur 102 B.

L'atténuateur 102 A peut commander soit la partie FI (Fréquence Intermédiaire) soit la partie RF (Radio Fréquence) du circuit émetteur 102, pour simplifier le schéma l'atténuateur est représenté commandant la partie RF, c'est à dire qu'il agit directement sur l'amplificateur 102 B. A la sortie de l'amplificateur 102 B est réalisée la détection de puissance d'émission au moyen d'un coupleur qui fournit l'indication de niveau de puissance émise aux moyens de commande 110 qui reçoivent d'autre part les informations de niveau de signal reçu et de qualité de signal reçu à la station réception via le circuit démultiplexeur 109. Les moyens de commande sont essentiellement constitués d'un circuit convertisseur numérique analogique 110 A qui fournit un signal de commande à un amplificateur 110 B qui reçoit d'autre part comme référence l'indication de puissance d'émission provenant du circuit émetteur 102, l'amplificateur 110 B est suivi d'un filtre passe-bande 110 C, le signal à la sortie du filtre passe-bande étant le signal de commande de l'atténuateur 102 A. Le circuit convertisseur numérique analogique 110 A peut être réalisé sous forme d'un compteur décompteur qui permet de réaliser des pas d'incrémentation ou de décrémentation, les pas étant fixés par les résistances de pondération du circuit convertisseur, ils peuvent être égaux ou variables.

Conformément à l'invention un dispositif de traitement combiné des informations est inséré dans les moyens de commande. En effet pour commander le circuit convertisseur 110 A à partir des différentes informations provenant de la station réception, un dispositif de traitement combiné des informations 110 D est inséré dans les moyens de commande. Le dispositif 110 D est de préférence un circuit de mémoire programmable (par exemple une PROM) dans la mémoire duquel a été programmé le traitement combiné qui est décrit avec la figure 4, il peut cependant être réalisé aussi sous forme discrète à partir de circuits logiques traditionnels.

A l'une des entrées du dispositifs 110 D est appliqué un signal logique, dépendant du niveau de puissance d'émission, élaboré à partir d'un circuit à seuils 110 E qui compare l'indication de puissance d'émission PE provenant du circuit émetteur 102 à des valeurs types telles que par exemple une valeur de puissance minimum d'émission PEO, une valeur du seuil haut dynamique de niveau reçu P1 correspondant au seuil haut de la première partie de la dynamique de réglage pour une prise en compte de la seule information du niveau de signal reçu, une valeur de puissance maximum PMAX relative au seuil haut de la seconde partie de la dynamique de réglage pour une prise en compte de plus de l'information de qualité du signal reçu.

Les autres entrées du dispositif 110 D sont connectées au circuit démultiplexeur 109 qui fournit les informations de niveau de signal reçu NR et de qualité de signal Q. Le dispositif 110 D après traitement des informations reçues contrôle le convertisseur 110 A au moyen de deux signaux, un signal INC pour imposer une incrémentation et donc une augmentation de puissance d'émission et un signal DEC pour imposer une décrémentation et ainsi une diminution de la puissance d'émission.

La figure 4 décrit un traitement mis en oeuvre à la station d'émission dans le dispositif de traitement combiné des informations pour commander l'augmentation ou la diminution de la puissance d'émission en exploitant les informations en provenance de la station de réception.

Le schéma décrit les différents états successifs de l'évolution du traitement combiné des informations qui conformément à l'invention consiste à produire une augmentation ou une diminution de la puissance d'émission PE pour une première partie de la dynamique de réglage en ne tenant compte uniquement que de l'information de niveau de signal reçu NR relativement à un premier seuil préétabli S1 et pour une seconde partie de la dynamique de réglage en tenant compte de plus de l'information de qualité du signal reçu Q relativement à un second seuil préétabli S2.

Ainsi à l'état E1 une première question est posée. Le niveau de signal reçu NR est-il supérieur au premier seuil de niveau préétabli S1 ? Si la réponse est oui, le dispositif est dans une phase de diminution et une seconde question est posée à l'état E2. La puissance d'émission PE est-elle égale à la puissance minimum d'émission permise PEO ? Si la réponse est oui la puissance d'émission ne peut plus être diminuée elle est conservée c'est l'état E3 et il y a retour à l'état E1 jusqu'à l'apparition de nouvelles réponses à la première ou à la deuxième question. Si par contre la réponse est non, il est possible de diminuer encore la puissance d'émission, il est donné un ordre de décrémentation DEC d'un pas c'est l'état E4 puis il y a retour à l'état E1 pour éventuellement continuer de diminuer la puissance d'émission par pas. Dans le cas où à l'état E1, la réponse à la première question (le niveau de signal reçu NR est-il inférieur au premier seuil préétabli S1 ?) est non une troisième question est posée à l'état E5. le niveau de puissance d'émission PE est-il inférieur à un seuil haut dynamique de niveau reçu P1 ? Le seuil P1 est le seuil à ne pas dépasser dans la première partie de la dynamique de réglage lorsqu'il n'est tenu compte que de l'information de niveau de signal reçu. Si la réponse est oui il est possible d'augmenter la puissance d'émission, il est donné un ordre d'incrémentation INC d'un pas c'est l'état E5 et il y a retour à l'état E1 pour éventuellement continuer d'augmenter la puissance d'émission par pas. Si par contre à l'état E5 la réponse à la troisième question est non, une quatrième question est posée à l'état E7. Le taux d'erreur TE dans le signal reçu, qui exprime la qualité du signal reçu Q, est-il supérieur au second seuil préétabli S2 ? Si la réponse est non il est donné un ordre de décrémentation DEC d'un pas à l'état E8 puis il y a retour à l'état E1 pour d'autres éventuelles diminutions de la puissance d'émission par pas. Si au contraire la réponse est oui une dernière question est posée à l'état E9. La puissance d'émission PE est-elle égale à la puissance maximum admise PMAX en sortie du circuit émetteur ? Dans le cas d'une réponse affirmative, la puissance d'émission ne peut plus être augmentée elle est donc conservée c'est l'état E10 et il y a retour à l'état E1. Si en revanche, la réponse est négative il est donné un ordre d'incrémentation INC d'un pas à l'état E11, ensuite il y a retour à l'état E1 pour, si nécessaire, augmenter de nouveau par pas la puissance d'émission, dès que le niveau reçu NR devient supérieur au seuil S1 une phase de décrémentation en l'état E4 est déclenchée pour éviter les phénomènes de blocage.

Ainsi dans des conditions normales de propagation le niveau de puissance d'émission est maintenu faible (largement inférieur au point de compression 1dB) de telle sorte que les non-linéarités de l'amplificateur soient négligeables et conduisent à un taux d'erreur résiduel très inférieur à $10^{-10}$.

En présence d'évanouissement de propagation lorsque le niveau de signal reçu NR descend en-dessous du seuil prédéterminé S1, les moyens de commande de la puissance d'émission augmentent dans un mode pas à pas la puissance d'émission de façon à maintenir la valeur de niveau de signal reçu à la valeur de consigne constituée par le seuil. Toutefois la valeur de puissance d'émission sera limitée à la valeur P1 située 6dB au-dessous du point de compression 1dB tant que la station de réception n'aura pas détecté la présence d'un taux d'erreur supérieur au seuil fixé S2. La détection de la présence d'un taux d'erreur supérieur au seuil fixé autorise alors le niveau de puissance d'émission à augmenter jusqu'au niveau PMAX environ 3dB inférieur au point de compression 1dB (au-delà le domaine de fortes non-linéarités serait atteint), ce qui a pour effet de réduire le temps de coupure dû aux évanouissements de propagation. Un des avantages du dispositif est ainsi atteint : permettre d'augmenter d'environ 3dB la puissance réellement utilisable d'un amplificateur à l'état solide utilisé pour transmettre une modulation du type MAQ 16, lors d'apparition d'évanouissements de propagation importants mais de conserver un niveau de puissance d'émission faible dans des conditions de propagation normales.

D'autre part, à l'heure actuelle les débits de 140M bit/s en modulation MAQ 16 sont transmis sur les faisceaux hertziens dans des plans de fréquence à 40 MHz, c'est à dire dont l'espacement entre deux canaux adjacents est de 40 MHz. Deux canaux adjacents sont transmis en polarisation croisée (orthogonale) et bénéficient d'un découplage de polarisation de l'ordre de 30 dB en période de propagation normale. En période d'évanouissement de propagation et lorsque la profondeur des évanouissements excède 15 dB, il y a perte du découplage de polarisation selon une relation du type :

$$XPD = 45 - A$$

où XPD représente le découplage de polarisation et A la profondeur d'évanouissement.

Pour éviter que la perturbation provoquée par cette perte de découplage ne réduise de façon importante la marge du faisceau, une protection supplémentaire par filtrage est nécessaire. Pour des canaux espacés de 40 MHz en utilisant un filtrage de Nyquist avec un facteur d'arrondi de 0,5 la protection obtenue est de l'ordre de 17 à 18 dB et permet ainsi de réaliser des faisceaux hertziens qui présentent une marge brute de 40 dB peu dégradée par la présence d'un canal adjacent.

L'utilisation de plans de fréquence à 30 MHz réduit, pour la modulation MAQ 16, dans les mêmes conditions cette protection par filtrage à 8 dB environ, ce qui entraîne une perte de marge brute importante sur des équipements présentant une marge brute initiale élevée.

L'utilisation du dispositif selon l'invention, permet d'exploiter des plans de fréquence à 30 MHz, en modulation MAQ 16 (16 états), en évitant d'avoir recours à des modulations plus complexes (64 états par exemple).

Pour cela il faut noter qu'en période d'évanouissements les canaux adjacents travaillant sur des polarisations croisées présentent une très forte corrélation pour des évanouissements n'excédant pas 10 à 15 dB et présentent une décorrélation quasi totale pour des évanouissements plus profonds.

La perte apparente de découplage de polarisation est ainsi due pour sa plus grande partie à la différence de niveau de signal reçu entre les deux canaux au niveau de l'antenne de réception.

Ainsi pour une liaison présentant une marge brute de 40 dB pour un canal isolé, il est possible de placer le niveau de puissance d'émission 15 dB en dessous du niveau de puissance nominale conduisant à la marge brute de 40 dB et de placer le seuil de niveau de signal reçu conduisant au début de la régulation du niveau de puissance d'émission à 10 dB au-dessus du seuil nominal. Par conséquent, quand les évanouissements n'excèdent pas 15 dB, phase pendant laquelle ils sont très corrélés, il n'y a pas de variation de la puissance d'émission, les niveaux des signaux reçus sont pratiquement identiques sur les deux polarisations. Lorsqu'un évanouissement sur un canal excède une profondeur de 15 dB, il y a alors début de régulation (augmentation de la puissance d'émission) sur ce canal sans qu'il y ait pratiquement de variation de la puissance d'émission sur le canal adjacent, dont la perturbation est ainsi réduite de 15 dB environ.

Un autre avantage du dispositif selon l'invention est donc qu'il permet l'utilisation de plans de fréquence à 30 MHz tout en conservant des équipements de modulation simple en MAQ 16.

Si pour la clarté et la simplicité de la description seules deux stations ont été mentionnées, la généralisation à n stations se fait à l'évidence, chaque station possédant une partie émission et une partie réception.

Enfin, l'utilisation du dispositif d'asservissement de la puissance d'émission selon l'invention n'est en aucune façon limitée à des applications relatives à des équipements de modulation 16 états.

**Revendications**

1. Dispositif d'asservissement de la puissance d'émission d'un système dans lequel au moins une station d'émission (1) et une station de réception (2) sont reliées par un faisceau hertzien, la station de réception (2) fournissant des informations relatives au signal reçu à la station d'émission (1) au moyen d'un canal de retour, dispositif d'asservissement comportant entre autres, à la station de réception (2)
   - un dispositif à seuil de signal reçu (204) pour fournir une information de signal reçu, relative à un premier seuil préétabli (S1) de seuil de niveau, (1),
   caractérisé en ce que la station d'émission comporte entre autres :
   - des moyens de commande (110) pour augmenter ou diminuer la puissance d'émission selon une dynamique de réglage présentant une partie linéaire (PEO-P1) et une partie non-linéaire (P1-PMAX),
   et un dispositif de traitement combiné pour agir sur les moyens de commande,
   et en ce que le dispositif d'asservissement comporte :
   - un dispositif à seuil du taux d'erreur du signal reçu, pour fournir une information de qualité de signal reçu relative à une valeur de seuil de qualité (S2),
   - des moyens de mesure de la puissance d'émission pour fournir une information de puissance émise (PE),
   le dispositif de traitement étant conçu pour traiter les informations de qualité, de niveau et de puissance et pour agir sur les moyens de commande
   - en augmentant ou en diminuant la puissance d'émission pour que le niveau de signal reçu soit proche de la première valeur de seuil de niveau (S1) tant que la puissance d'émission se situe dans une partie de ladite dynamique de réglage considérée comme linéaire (PEO < PE < P1),
   - en augmentant la puissance d'émission sans excéder un niveau de puissance maximum (PMAX) jusque dans la partie de la dynamique de réglage considérée comme non linéaire (P1 < PE < PMAX) lorsque le niveau reçu est en dessous du premier seuil (S1), que la puissance d'émission (PE) est au-dessus d'un niveau de puissance d'émission (P1) qui est le point de séparation des parties linéaire et non-linéaire et que le signal de qualité est en dessous de la valeur de seuil de qualité (S2).

2. Dispositif d'asservissement de la puissance d'émission selon la revendication 1, caractérisé en ce que la station de réception comporte des moyens de détection de perte de synchronisation pour fournir une information de perte de synchronisation qui est transmise à la station d'émission pour conserver le niveau de la puissance émise pendant un certain temps (Ta) et le ramener ensuite à son niveau minimum.

3. Dispositif d'asservissement de la puissance d'émission selon la revendication 1 ou 2, caractérisé en ce que le dispositif de traitement combiné des informations est inséré dans les moyens de commande.

4. Dispositif d'asservissement de la puissance d'émission selon la revendication 1 ou 2, caractérisé en ce que le dispositif à seuil de mesure de la qualité du signal reçu comporte entre autres un circuit de comptage pour compter les divergences de parité.

5. Dispositif d'asservissement de la puissance d'émission selon la revendication 1 ou 2, caractérisé en ce que les informations de niveau de signal reçu et de qualité du signal reçu sont stockées dans un registre et écoulées en mode série.

6. Dispositif d'asservissement de la puissance d'émission selon l'une des revendications 1 à 5, caractérisé en ce que la valeur maximale (PMAX) est située à 3 dB en dessous du point de compression 1 dB.

**Patentansprüche**

1. Einrichtung zur Steuerung der Sendeleistung einer Richtfunkstrecke zwischen wenigstens einer Sendestation (1) und einer Empfangsstation (2), die mittels eines Rückkehrkanals Information in bezug auf das empfangene Signal zu der Sendestation (1) gibt, wobei die Steuereinrichtung u.a. in der Empfangsstation (2) die folgenden Elemente aufweist:
   - eine Schwelleneinrichtung zur Messung des Pegels des empfangenen Signals (204) und Information in bezug auf den Pegel (S1) des empfangenen Signals liefert, und
   dadurch gekennzeichnet, daß die Sendestation u.a. die nachfolgenden Elemente aufweist:
   - Steuermittel (110) zur Steigerung bzw. Verringerung der Sendeleistung entsprechend einem bestimmten dynamischen Steuermuster, mit einem linearen Teil (PEO-P1) und einem nicht-linearen Teil (P1-PMAX)
   und eine kombinierte Bearbeitungseinrichtung zum Beeinflußen der Steuermittel, und daß die Einrichtung die folgenden Elemente aufweist:
   - eine Schwellenanordnung zur Messung der Fehlerrate des empfangenen Signals, zum Liefern von Information über die Qualität des empfangenen Signals gegenüber einem Qualitätsschwellenwert (S2)
   - Mittel zur Messung der Sendeleistung zum Liefern von Information über die gesendete Leistung (PE),
wobei die Informationsverarbeitungsanordnung dazu vorgesehen ist, die Qualitätsinformation, die Pegelinformation und die Leistunfsinformation zu verarbeiten und die Steuermittel zu beeinflußen
   - indem die Sendeleitung gesteigert oder verringert wird, damit der Pegel des empfangenen Signals nahe bei dem ersten Wert des Schwellenpegels (S1) liegt, so daß die Sendeleistung innerhalb eines Teils des genannten als linear bezeichneten dynamischen Regelbereichs liegt (PEO < PE < P1),
   - indem die Sendeleistung gesteigert wird ohne Überschreitung eines maximalen Leistungspegels (PMAX) bis in dem betreffenden als nichtlinear betrachteten dynamischen Regelbereich (P1 < PE < PMAX) bis der empfangene Pegel unterhalb der ersten Schwelle (S1) liegt, daß die Sendeleistung (PE) über einem Sendeleistungspegel (P1) liegt, welcher Pegel der Trennpunkt des linearen und des nicht-linearen Teils ist, und daß das Qualitätssignal unter dem Qualitätsschwellenwert (S2) liegt.

2. Einrichtung zur Sendeleistungssteuerung nach Anspruch 1, dadurch gekennzeichnet, daß die Empfangsstation Detektionsmittel zum Detektieren von Synchronisationsverlust aufweist zum Liefern einer Information über den Verlust von Synchronisation, die von der Sendestation gesendet wird zum Beibehalten des Pegels der gesendeten Sendeleistung während einer bestimmten Zeit (Ta) und zum Zurückbringen desselben auf den minimalen Pegel.

3. Einrichtung zur Sendeleistungssteuerung nach Anspruch 1 oder 2, dadurch gekennzeichnet, daß die Einrichtung zur kombinierten Verarbeitung der Informationen in den Steuermitteln vorgesehen ist.

4. Einrichtung zur Sendeleistungssteuerung nach Anspruch 1 oder 2, dadurch gekennzeichnet, daß die Schwelleneinrichtung zur Messung der Qualität des empfangenen Signals u.a. eine Zähleinrichtung aufweist zum Zählen der Paritätsabweichungen.

5. Einrichtung zur Sendeleistungssteuerung nach Anspruch 1 oder 2, dadurch gekennzeichnet, daß die Informationen über den Pegel des empfangenen Signals und die Qualität des empfangenen Signals in einem Register gespeichert und seriell ausgegeben werden.

6. Einrichtung zur Sendeleistungssteuerung nach einem der Ansprüche 1 bis 5, dadurch gekennzeichnet, daß der maximale Wert (PMAX) um 3 dB unterhalb des Kompressionspunktes 1 dB liegt.

**Claims**

1. A device for controlling the transmission power of a system in which at least one transmitting station (1) and one receiving station (2) are linked by microwave link, the receiving station (2) providing information concerning the received signal to the transmitting station (1) by means of a return channel, which control device comprises, inter alia, at the receiving station (1)
   - a received-signal threshold device (204) for supplying information of the received signal relative to a first predetermined level threshold (S1), characterized in that the transmitting station (1) comprises inter alia:
   - control means (110) for increasing or decreasing the transmission power according to a dynamic control range having a linear part (PEO-P1) and a non-linear part (P1-PMAX),
   and a combined processing device for acting on the control means,
   and in that the control device comprises:
   - a threshold device for the received-signal error rate in order to supply quality indication of the received signal relative to a quality threshold value (S2),
   - means for measuring the transmission power in order to supply transmitted-power information (PE),
   the processing device being conceived to process the information concerning quality, level and power and to act on the control means
   - by increasing or decreasing the transmission power to ensure that the received-signal level is close to the first level threshold value (S1) for as long as the transmission power is in a part of said dynamic control range which is considered to be linear (PEO < PE <P1),
   - by increasing the transmission power, without exceeding a maximum (PMAX), until the part of the dynamic control range is reached which is considered to be non-linear (P1 < PE < PMAX) when the level received is below the first threshold (S1), that the emission power (PE) is above an emission power level (P1), being the point separating the linear and non-linear parts, and that the quality signal is below the quality threshold value (S2).

2. A transmission power control device as claimed in Claim 1, characterized in that the receiving station comprises means for detecting loss of synchronization to the transmitting station in order to maintain the transmitted power level for a given period of time (Ta) and to control it to its minimum level subsequently.

3. A transmission power control device as claimed in Claim 1 or 2, characterized in that the combined information processing device is included in the control means.

4. A transmission power control device as claimed in Claim 1 or 2, characterized in that the threshold device for measuring the received-signal quality comprises inter alia counting circuit for counting the parity divergences.

5. A transmission power control device as claimed in Claim 1 or 2, characterized in that the received-signal level information and the received-signal quality information is stored in a register and output in the serial mode.

6. A transmission power control device as claimed in any one of the Claims 1 to 45, characterized in that the maximum value (PMAX) is situated 3 dB below the 1 dB compression point.

FIG.1

FIG.2

FIG.3

FIG.4